# EUROPÄISCHE PATENTSCHRIFT

(11) **EP 0 476 323 B1**
(45) Veröffentlichungstag und Bekanntmachung des Hinweises auf die Patenterteilung: **15.01.1997**
(21) Anmeldenummer: 91113888.1
(22) Anmeldetag: 20.08.1991
(51) Int. Cl.: C08G 59/32, C08G 59/42, C09D 133/06, C09D 163/00, C09D 129/02

(54) **Bindemittelkombinationen und ihre Verwendung in Beschichtungsmitteln und Dichtmassen**
Binder combinations and their use as a coating and a sealant
Combinaisons de liants et leur application comme revêtement et masse d'étanchéité

(30) Priorität: 01.09.1990 DE 4027742
(43) Veröffentlichungstag der Anmeldung: 25.03.1992
(73) Patentinhaber: BAYER AG, 51368 Leverkusen (DE)
(72) Erfinder: Wamprecht, Christian, Dr., W-4040 Neuss 22 (DE); Blum, Harald, Dr., W-4175 Wachtendonk 2 (DE); Pedain, Josef, Dr., W-5000 Köln 80 (DE)

(56) Entgegenhaltungen:
- EP-A- 0 316 874
- EP-A- 0 358 306
- US-A- 4 374 954

## Beschreibung

Die vorliegende Erfindung betrifft neue Bindemittelkombinationen, bestehend im wesentlichen aus Epoxid- und Hydroxylgruppen enthaltenden Copolymerisaten, sowie organischen Verbindungen, welche mindestens zwei cyclische Carbonsäureanhydridgruppen pro Molekül aufweisen, sowie ihre Verwendung in Beschichtungsmitteln und Dichtmassen.

Die Verwendung von Zweikomponentensystemen, bestehend aus organischen Verbindungen mit mindestens zwei intramolekularen Carbonsäureanhydridgruppen pro Molekül und Polyhydroxylverbindungen, als Bindemittel für Lacke und Beschichtungsmittel ist bereits bekannt.

Die US-A-4 374 954 beschreibt Bindemittelkombinationen, die eine Hydroxylgruppen und Epoxidgruppen enthaltende Copolymerisert-Komponente und als Härter intermolekulare Polyanhydride von Dicarbonsäuren enthalten.

Die FR-A-23 92 092 beschreibt Beschichtungskompositionen, bestehend aus hydroxyfunktionellen Polymeren und einem Esteranhydrid mit mindestens zwei Anhydridgruppen pro Molekül, wobei das Esteranhydrid ein Derivat von Trimellitsäureanhydrid ist.

Die EP-A-48 128 beschreibt Beschichtungskompositionen, bestehend aus einer Hydroxylkomonente mit mindestens zwei Hydroxylgruppen pro Molekül, einer Anhydridkomponente mit mindestens zwei Anhydridgruppen pro Molekül und gegebenenfalls einer als Katalysator wirkenden Aminkomponente. Nachteilig bei diesen Systemen erweist sich die für hochwertige Decklackierungen nicht ausreichende Lösungsmittelbeständigkeit.

Sowohl bei Raumtemperatur härtende als auch Einbrennbindemittel auf Basis von Carboxylgruppen und Epoxidgruppen enthaltenden Bindemittelkomponenten sind ebenfalls bereits bekannt.

Die DE-A-26 35 177 und DE-A-27 28 459 beschreiben lösungsmittelarme Einbrennlacke, bestehend aus einem carboxylgruppenhaltigen Polyacrylat, einem Epoxidharz mit mindestens zwei Epoxidgruppen pro Molekül und einem Lösungsmittelgemisch. Nachteilig wirkt sich bei diesen Systemen die schleichende Vorreaktion zwischen freien Carboxyl- und freien Epoxidgruppen aus, was zu einer unzureichenden Standzeit der Lacke führen kann.

Die unter der Nummer WO 84/00768 veröffentlichte internationale Patentanmeldung beschreibt ternäre hitzehärtbare Beschichtungskompositionen, bestehend aus (i) einem Epoxid- und Hydroxylgruppen aufweisenden Polyacrylat, (ii) einem speziellen Dicarbonsäureanhydrid und (iii) einem Aminharzvernetzer. Die Anhydridkomponente enthält jedoch pro Molekül lediglich eine Carbonsäureanhydridgruppe. Beschichtungsmittel auf Basis dieser ternären Systeme können, wie den Ausführungsbeispielen zu entnehmen ist, selbst in Gegenwart von Katalysatoren nur bei hohen Härtungstemperaturen wie ca. 130°C ausgehärtet werden. Die unter den Nummern WO 84/00770 bzw. WO 84/00771 veröffentlichten internationalen Patentanmeldungen beschreiben ähnliche Systeme mit dem Unterschied, daß die erste Komponente nur Hydroxylgruppen aufweist und eine separate, Epoxidgruppen aufweisende Komponente, zusätzlich noch vorliegt.

Ebenfalls bekannt ist die Verwendung von Dreikomponentensystemen, bestehend aus organischen Verbindungen mit mindestens zwei intramolekularen Carbonsäureanhydridgruppen pro Molekül, Polyhydroxylverbindungen und Polyepoxidverbindungen, als Bindemittel für Lacke und Beschichtungsmittel. Diese Systeme sind beispielsweise Gegenstand der folgenden Patentanmeldungen: EP-A 134 691, EP-A 316 874 und EP-A 358 306.

Die genannten Mehrkomponentensysteme sind zwar den zuvor zitierten Zweikomponentensystemen bezüglich Lösungsmittelbeständigkeit der Lackfilme überlegen, besitzen jedoch den Nachteil, daß die Einzelkomponenten miteinander vollständig verträglich sein müssen, um ein gutes optisches Aussehen des Lackfilms zu gewährleisten. Dieser Umstand schränkt die Variationsbreite der Einzelkomponenten erheblich ein.

Es war die der Erfindung zugrundeliegende Aufgabe, neue Bindemittelkombinationen auf Basis von Carbonsäureanhydrid-, Hydroxyl- und Epoxidgruppen aufweisenden organischen Verbindungen zur Verfügung zu stellen, die nicht mit den genannten Nachteilen der Systeme des Standes der Technik behaftet sind und insbesondere eine für Lackanwendungen ausreichende Standzeit aufweisen und dennoch je nach Anwendungsbereich, bereits bei Raumtemperatur oder erhöhter Temperatur zu klaren, farblosen, vergilbungsbeständigen und lösungsmittelfesten Lackfilmen ausgehärtet werden können.

Diese Aufgabe konnte durch die Bereitstellung der nachstehend näher beschriebenen Bindemittelkombinationen gelöst werden.

In den erfindungsgemäßen Bindemittelkombinationen liegt eine Komponente A), die sowohl freie Epoxidgruppen als auch freie Hydroxylgruppen chemisch gebunden aufweist, und eine Komponente B) vor, die mindestens zwei cyclische Carbonsäureanhydridgruppen pro Molekül enthält. Derartige Bindemittelkombinationen sich bisher noch nicht beschrieben worden. Der besondere Vorteil solcher Systeme liegt in der Tatsache, daß die reaktiven Gruppierungen in Form von Epoxid-, Hydroxyl- und Carbonsäureanhydridgruppen in nur zwei Komponenten A) und B) enthalten sind, und daß in der Komponente B) zunächst noch keine freien Carboxylgruppen, welche zur Vernetzung mit den Epoxidgruppen der Komponente A) erforderlich sind, vorliegen, sondern daß diese Carboxylgruppen erst aus der Reaktion der Carbonsäureanhydrid- mit den Hydroxylgruppen durch Einwirkung von Katalysatoren oder Hitze erzeugt werden.

Somit weisen diese Bindemittelkombinationen eine erheblich bessere Lagerstabilität bei Raumtemperatur auf, als vergleichbare Systeme des Standes der Technik, welche freie Carboxylgruppen enthalten. Ein weiterer Vorteil der erfindungsgemäßen Bindemittelkombinationen besteht darin, daß es sich bei der Vernetzungsreaktion um einen sogenannten "double-cure"-Mechanismus handelt, d.h., zunächst reagieren die Hydroxylgruppen der Komponente A) mit den Anhydridgruppen der Komponente B) unter Anhydridringöffnung und Ausbildung von Carboxylgruppen. Diese Reaktion stellt schon einen Vernetzungsvorgang dar. Darüber hinaus können jedoch die neu entstandenen Carboxylgruppen mit den Epoxidgruppen der Komponente A) reagieren, was eine zusätzliche Vernetzung zur Folge hat.

Aufgrund der erzielbaren hohen Vernetzungsdichten resultieren aus den erfindungsgemäßen Bindemittelkombinationen Beschichtungen, die ein sehr hohes Niveau bezüglich Chemikalien- und Lösungsmittelbeständigkeit aufweisen.

Gegenstand der Erfindung sind Bindemittelkombinationen enthaltend
A) 10 bis 99 Gew.-Teile einer Copolymerisat-Komponente, bestehend aus mindestens einem Copolymerisat von olefinisch ungesättigten Verbindungen mit einem als Gewichtsmittel bestimmten Molekulargewicht von 1500 bis 75 000, welches sowohl
   (i) 0,1 bis 8,0 Gew.-% an freien Hydroxylgruppen
      als auch
   (ii) 1 bis 29 Gew.-% an Epoxidgruppen (gerechnet als C₂H₃O)
      chemisch gebunden enthält, und
B) 1 bis 90 Gew.-Teile einer Anhydrid-Komponente, bestehend aus mindestens einem organischen Polyanhydrid mit mindestens zwei cyclischen Carbonsäureanhydridgruppen pro Molekül,
mit der Maßgabe, daß auf jede Epoxidgruppe der Komponente A) 0,1 bis 10 Anhydridgruppen der Komponente B) entfallen.

Gegenstand der Erfindung ist auch die Verwendung der Bindemittelkombinationen als Bindemittel für hitzehärtbare Beschichtungsmittel oder Dichtmassen oder, in Gegenwart von Katalysatoren, als Bindemittel für bei Raumtemperatur härtbaren Beschichtungsmittel oder Dichtmassen.

Die Copolymerisatkomponente A) besteht aus mindestens einem Copolymerisat, welches sowohl chemisch eingebaute freie Hydroxylgruppen in einer Menge von 0,1 bis 8,0 Gew.-%, vorzugsweise 0,4 bis 4,0 Gew.-% als auch chemisch eingebaute Epoxidgruppen in einer Menge von 1 bis 29 Gew.-%, vorzugsweise 5 bis 25 Gew.-% enthält. Die Copolymerisate weisen ein, nach der Methode der Gelpermeationschromatographie unter Verwendung von Polystyrol als Standard bestimmbares Molekulargewicht (Gewichtsmittel) von 1500 bis 75 000, vorzugsweise 2000 bis 60 000 und besonders bevorzugt 3000 bis 40 000, auf. Es handelt sich bei den Copolymerisaten um solche auf Basis von vorzugsweise einfach olefinisch ungesättigten Monomeren.

Zur Herstellung der Copolymerisate kommen drei Gruppen von olefinisch ungesättigten Monomeren zum Einsatz und zwar
a) Hydroxylgruppen enthaltende, olefinisch ungesättigte Monomere,
b) Epoxidgruppen enthaltende, olefinisch ungesättigte Monomere und
c) Hydroxylgruppen- und Epoxidgruppen-freie, nichtfunktionelle, olefinisch ungesättigte Monomere.

Die Monomeren a) werden im allgemeinen in einer Menge von 0,5 bis 70, vorzugsweise 5 bis 40 Gew.-Teilen, die Monomeren b) in einer Menge von 3 bis 97, vorzugsweise 5 bis 50 Gew.-Teilen, und die Monomeren c) in einer Menge von 0 bis 96,5, vorzugsweise 10 bis 90 Gew.-Teilen eingesetzt, mit der Maßgabe, daß die Summe der Anteile a) bis c) 100 Gew.-Teile ergibt.

Außerdem werden die Anteile der einzelnen Monomeren in dem der Copolymerisation zuzuführenden Gemisch so bemessen, daß in den Copolymerisaten die obengenannten Mengen an chemisch eingebauten Hydroxyl- und Epoxidgruppen vorliegen. Der Gehalt der Copolymerisate an diesen Gruppierungen entspricht dem Gehalt des Monomergemischs an den gleichen Gruppen, da davon ausgegangen werden kann, daß die Copolymerisate bezüglich ihrer chemischen Zusammensetzung der chemischen Zusammensetzung des Monomerengemischs entsprechen.

Bei den Monomeren a) handelt es sich um einfach olefinisch ungesättigte Alkohole, die vorzugsweise ein Molekulargewicht von 58 bis 500 und vorzugsweise aliphatisch gebundene Hydroxylgruppen aufweisen. Gut geeignet sind beispielsweise übliche Hydroxyalkylester der Acryl- und Methacrylsäure des Molekulargewichtsbereichs 116 bis 200 wie z.B. Hydroxyethyl(meth)acrylat, 2- und 3-Hydroxypropyl(meth)acrylat, 1-Methyl-2-hydroxyethyl(meth)acrylat, 4-Hydroxybutyl(meth)acrylat; Hydroxyalkylvinylether wie z.B. 2-Hydroxyethylvinylether oder 4-Hydroxybutylvinylether; Allylalkohol, Hydroxyderivate des (Meth)acrylamids wie z.B. N-(3-Hydroxy-2,2-dimethylpropyl)(meth)acrylamid; Umsetzungsprodukte von Gylcidyl(meth)acrylat mit Monocarbonsäuren; Umsetzungsprodukte von (Meth)acrylsäure mit Monoepoxidverbindungen; sowie Umsetzungsprodukte der zuvor genannten OH-funktionellen, olefinisch ungesättigten Verbindungen mit ε-Caprolacton oder Butyrolacton.

Typische Beispiele für Monomere b) sind z.B. Glycidylacrylat, Glycidylmethacrylat oder Allylglycidylether, wobei die beiden erstgenannten bevorzugt sind.

Die Monomeren c) weisen im allgemeinen ein Molekulargewicht von 86 bis 400 auf. Es handelt sich um die üblichen Hydroxylgruppen- und Epoxidgruppen-freien, vorzugsweise einfach olefinisch ungesättigten Monomeren, wie sie auch bereits bei den Verfahren des obengenannten Standes der Technik als Monomere eingesetzt worden sind.

Typische Beispiele sind Ester der Acryl- und Methacrylsäure wie beispielsweise Methylacrylat, Ethylacrylat, n-Butylacrylat, Isobutylacrylat, tert.-Butylacrylat, 2-Ethylhexylacrylat, Cyclohexylmethacrylat, Methylmethacrylat, n-Butylmethacrylat, Isobutylmethacrylat oder 2-Ethylhexylmethacrylat; Vinylaromaten wie beispielsweise Styrol, Vinyltoluol, α-Methylstyrol, α-Ethylstyrol, kernsubstituierte, gegebenenfalls Isomerengemische darstellende Diethylstyrole, Isopropylstyrole, Butylstyrole und Methoxystyrole; Vinylether wie beispielsweise Ethylvinylether, n-Propylvinylether, Isopropylvinylether, n-Butylvinylether und Isobutylvinylether; Vinylester wie beispielsweise Vinylacetat, Vinylpropionat und Vinylbutyrat.

Bei der Durchführung der Copolymerisation können selbstverständlich jeweils beliebige Gemische der beispielhaft genannten Monomeren a) bis c) verwendet werden.

Die Herstellung der Copolymerisate kann durch Copolymerisation der beispielhaft genannten Monomeren a) bis c) nach üblichen radikalischen Polymerisationsverfahren erfolgen, wie beispielsweise Masse- oder Lösungopolymerisation.

Dabei werden die Monomeren im allgemeinen bei Temperaturen von 60 bis 180°C, vorzugsweise 80 bis 160°C, in Gegenwart von Radikalbildnern und gegebenenfalls Molekulargewichtsreglern copolymerisiert.

Die Copolymerisation wird vorzugsweise in inerten Lösungsmitteln durchgeführt. Geeignete Lösungsmittel sind beispielsweise Aromaten wie Benzol, Toluol, Xylol, Ester wie Ethylacetat, Butylacetat, Hexylacetat, Heptylacetat, Methylglykolacetat, Ethylglykolacetat, Methoxypropylacetat, Ether wie Tetrahydrofuran, Dioxan, Diethylenglykoldimethylether, Ketone wie Aceton, Methylethylketon, Methylisobutylketon, Methyl-n-amylketon, Methylisoamylketon.

Die Copolymerisation kann kontinuierlich oder diskontinuierlich erfolgen. Üblicherweise wird in einen Polymerisationsreaktor gleichmäßig und kontinuierlich die Monomermischung und der Initiator eindosiert und gleichzeitig die entsprechende Menge Polymerisat kontinuierlich abgeführt.

Vorzugsweise können so chemisch nahezu einheitliche Copolymere hergestellt werden. Chemisch nahezu einheitliche Copolymere können auch hergestellt werden, indem man die Reaktionsmischung mit konstanter Geschwindigkeit in einen Rührkessel einlaufen läßt, ohne das Polymerisat abzuführen.

Man kann auch einen Teil der Monomeren beispielsweise in Lösungsmitteln der genannten Art vorlegen und die restlichen Monomeren und Hilfsmittel getrennt oder gemeinsam in diese Vorlage bei der Reaktionstemperatur eintragen.

Im allgemeinen erfolgt die Polymerisation unter Atmosphärendruck, jedoch sind auch Drücke bis 20 bar anwendbar. Die Initiatoren werden in Mengen von 0,05 bis 15 Gew.-%, bezogen auf die Gesamtmenge der Monomeren, eingesetzt.

Geeignete Initiatoren sind übliche Radikalstarter wie z.B. aliphatische Azoverbindungen wie Azodiisobuttersäurenitril, Azo-bis-2-methylvaleronitril, 1,1'-Azo-bis-1-cyclohexannitril und 2,2'-Azo-bis-isobuttersäurealkylester; symmetrische Diacylperoxide, z.B. Acetyl-, Propionyl- oder Butyrylperoxid, mit Brom-, Nitro-, Methyl- oder Methoxygruppen substituierte Benzoylperoxide, symmetrische Peroxydicarbonate, z.B. Diethyl-, Diisopropyl-, Dicyclohexyl- sowie Dibenzoylperoxydicarbonat; tert.-Butylperoxy-2-ethyl-hexanoat, tert.-Butylperbenzoat; Hydroperoxide wie beispielsweise tert.-Butylhydroperoxid, Cumolhydroperoxid; Dialkylperoxide wie Di-cumylperoxid; tert.-Butylcumylperoxid oder Di-tert.-butylperoxid.

Zur Regelung des Molekulargewichts der Copolymerisate können übliche Regler bei der Herstellung eingesetzt werden. Beispielhaft genannt seien tert.-Dodecylmercaptan, n-Dodecylmercaptan oder Diisopropylxanthogendisulfid. Die Regler können in Mengen von 0,1 bis 10 Gew.-%, bezogen auf die Gesamtmenge der Monomeren, zugegeben werden.

Die bei der Copolymerisationsreaktion anfallenden Lösungen der Copolymerisate können dann ohne weitere Aufarbeitung zur Herstellung der erfindungsgemäßen Bindemittelkombinationen eingesetzt werden.

Die Komponente B) besteht aus mindestens einer organischen Verbindung, die mindestens zwei cyclische Carbonsäureanhydridgruppen pro Molekül aufweist. Der Gehalt dieser Verbindungen an Carbonsäureanhydridgruppen (formal berechnet als C₄O₃, Molekulargewicht = 96) liegt bei 5 bis 88, vorzugsweise 6 bis 30 Gew.-%. Geeignet sind beispielsweise Trimellitsäureanhydrid-Addukte der allgemeinen Formel (I) 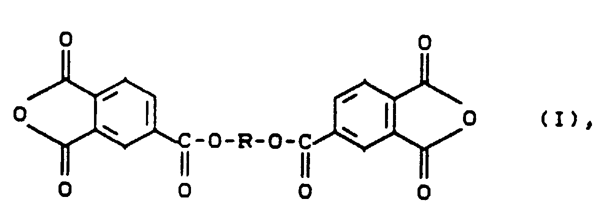 wobei R für einen zweiwertigen, gegebenenfalls Ethersauerstoffatome aufweisenden Kohlenwasserstoffrest mit 2 bis 12 Kohlenstoffatomen steht. In Betracht kommende Verbindungen der Formel (I) sind beispielsweise die entsprechenden Trimellitsäureanhydrid-Ester von Ethylenglykol, Propylenglykol, Diethylenglykol, Triethylenglykol, Neopentylglykol, Glycerin oder Trimethylolpropan.

Weitere geeignete Polyanhydride sind beispielsweise Benzophenontetracarbonsäuredianhydride der Formel (II) 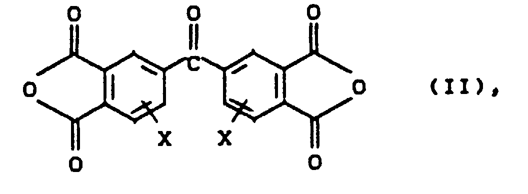 wobei X für Wasserstoff oder Halogen, -NO₂, -COOH oder -SO₃H Substituenten steht und bei beiden aromatischen Kernen gleich oder verschieden sein kann. Beispiele dafür sind 3,3',4,4'-Benzophenontetracarbonsäuredianhydrid; 2-Brom-3,3',4,4'-benzophenontetracarbonsäuredianhydrid oder 5-Nitro-3,3',4,4'-benzophenontetracarbonsäuredianhydrid.

Weiterhin geeignet ist beispielsweise auch 1,2,4,5-Benzoltetracarbonsäuredianhydrid der Formel (III)

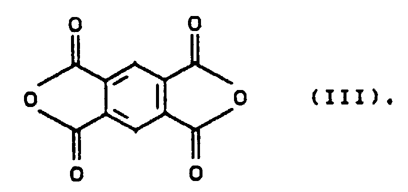

Besonders bevorzugt besteht die Komponente B) aus Copolymerisaten von olefinisch ungesättigten Monomeren, die pro Molekül im statistischen Mittel mindestens 2 cyclische Carbonsäureanhydridgruppen aufweisen. Bevorzugt handelt es sich hierbei um Copolymerisate von Maleinsäureanhydrid und/oder Itaconsäureanhydrid mit Comonomeren wie sie beispielsweise bei der Komponente A) als Monomere c) zum Einsatz kommen und bereits oben beispielhaft offenbart sind. Besonders gut geeignet sind Copolymerisate, basierend auf Maleinsäureanhydrid, Styrol und Alkylestern der Acryl- und/oder Methacrylsäure. Die Copolymerisate weisen vorzugsweise ein nach der bereits obengenannten Methode bestimmtes Molekulargewicht von 1500 bis 75000 , vorzugsweise 2000 bis 50000 auf. Ihre Herstellung erfolgt in völliger Analogie zu der Herstellung der Copolymerisate A).

Die Mengenverhältnisse der Einzelkomponenten A) und B) werden im allgemeinen so gewählt, daß auf jede Epoxidgruppe der Komponente A) 0,1 bis 10, vorzugsweise 0,5 bis 5 und besonders bevorzugt 0,8 bis 1,5 Anhydridgruppen der Komponente B) entfallen.

Die erfindungsgemäßen Bindemittelkombinationen stellen wertvolle Bindemittel für Beschichtungsmittel oder Dichtmassen dar. Aufgrund der Reaktionsfähigkeit von cyclischen Carbonsäureanhydridgruppen gegenüber Hydroxylgruppen bei Hitzeeinwirkung und der Reaktionsfreudigkeit der bei dieser Reaktion entstehenden Carbonsäuregruppen gegenüber Epoxidgruppen eignen sich die erfindungsgemäßen Bindemittelkombinationen ohne weitere Zusätze als Bindemittel für hitzehärtbare Beschichtungsmittel oder Dichtmassen, die beispielsweise innerhalb des Temperaturbereichs von 120 bis 200°C innerhalb eines Zeitraums von ca. 10 bis 60 Minuten ausgehärtet werden können. Da in den Bindemittelkombinationen zunächst keine freien Carboxylgruppen vorliegen, weisen sie bei Raumtemperatur eine sehr gute Lagerstabilität auf. Sie können jedoch nach Zusatz von geeigneten Katalysatoren auch als Bindemittel für bei Raumtemperatur aushärtende Beschichtungsmittel und Dichtmassen Verwendung finden.

Hierzu bedarf es einer Katalysatorkomponente C), die die Reaktionsfähigkeit der Säureanhydridgruppen gegenüber den Hydroxylgruppen soweit steigert, daß bereits bei niedrigen Temperaturen, wie z.B. Raumtemperatur, eine Vernetzungsreaktion einsetzt. Solche Katalysatoren sind beispielsweise tert.Aminogruppen enthaltende Verbindungen. Es kann sich dabei um Verbindungen handeln, die entweder gegenüber Säureanhydrid- bzw. Epoxidgruppen inert sind oder aber zusätzlich zur tert.Aminogruppe eine gegenüber Säureanhydrid- bzw. Epoxidgruppen reaktionsfähige Gruppe (Hydroxylgruppe, primäre oder sekundäre Aminogruppe) aufweisen. Im zweiten Fall wird die Katalysatorkomponente C) in die Bindemittelkomponenten A) und/oder B) durch Reaktion ihrer reaktionsfähigen Gruppe mit Epoxid- und/oder Anhydridgruppen unter Ausbildung von sekundären oder tertiären Aminogruppen verbunden mit der Ausbildung einer zusätzlichen Hydroxylgruppe (aus der Epoxidgruppe) bzw. Halbester- und/oder Halbamidstrukturen (aus der Anhydridgruppe) chemisch eingebaut.

Als Katalysatoren geeignete Verbindungen C) sind beispielsweise tert.Amine des Molekulargewichtsbereichs 73 bis 300 wie Ethyldimethylamin, Diethylmethylamin, Triethylamin, Ethyldiisopropylamin, Tri-n-butylamin, 1-Methylpyrrolidin, 1-Methylpiperidin, 1,4-Dimethylpiperazin, 1,4-Diazabicyclo(2,2,2)octan oder 1,8-Diazabicyclo(5,4,0)-under-7-en, N,N-Dimethylethanolamin, N,N-Diethylpropanolamin, N,N-Di-n-butylethanolamin, 1-Amino-3-(diethylamino)-propan oder 1-Amino-2-(diethylamino)-ethan. Es können auch beliebige Gemische der beispielhaft genannten tert.Amine als Komponente C) eingesetzt werden.

Weiterhin ist es auch möglich, organische Verbindungen mit mindestens einer tert.Aminogruppe einzusetzen, die ein Molekulargewicht von mehr als 300 besitzen. Solche Substanzen können z.B. Umsetzungsprodukte von olefinisch ungesättigten (Meth)acrylatgruppen aufweisenden Verbindungen mit sekundären Aminen sein, z.B. Umsetzungsprodukte aus 1 Mol Trimethylolpropantriacrylat und 3 Mol Di-n-butylamin.

Aber auch Umsetzungsprodukte von Polyisocyanaten mit N,N-Dialkylalkanolaminen, wie z.B. das Umsetzungsprodukt aus 1 Mol biuretisiertem Polyisocyanat auf Basis von Hexamethylendiisocyanat und 3 Mol N,N-Dimethylethanolamin, sind geeignet.

Verbindungen, die neben einer tertiären Aminogruppe noch eine Hydroxylgruppe aufweisen, können beispielsweise auch hergestellt werden durch Reaktion von Verbindungen, die eine Epoxidgruppe enthalten, mit sekundären Aminen; z.B. das Umsetzungsprodukt aus Ethylhexylglycidylether und Di-n-butylamin.

Außer tert.Aminogruppen enthaltenden Verbindungen sind als Katalysatorkomponente C) auch Verbindungen geeignet, die quartäre Ammoniumgruppen enthalten, wie beispielsweise (2-Hydroxyethyl)trimethylammoniumchlorid, Tetrabutylammoniumchlorid, Tetrabutylammoniumbromid, Tetraethylammoniumbromid, Tetrahexylammoniumchlorid.

Es können als Katalysatorkomponente C) jedoch auch Zinnverbindungen wie z.B. Zinndioctoat, Dibutylzinndilaurat, Dibutylzinndiacetat und Dibutylzinndichlorid sowie Phosphorverbindungen wie z.B. Triphenylphosphin eingesetzt werden.

Die die erfindungsgemäßen Bindemittelkombinationen als Bindemittel enthaltenden Beschichtungsmittel oder Dichtmassen können selbstverständlich auch noch weitere Hilfs- und Zusatzmittel D) wie beispielsweise Lösungs- bzw. Verdünnungsmittel, Verlaufhilfsmittel, Antioxidantien, UV-Absorber oder Pigmente enthalten.

Die Herstellung der Beschichtungsmittel oder Dichtmassen erfolgt dergestalt, daß man je nach Anwendungszweck entweder die Ausgangskomponenten A), B), C) und gegebenenfalls D) miteinander vermischt oder nur die Ausgangskomponenten A), B) und gegebenenfalls D) wie nachfolgend beschrieben zur Anwendung bringt. Im Falle der Mitverwendung von Lösungs- bzw. Verdünnungsmittel als Komponente D) können diese bereits der Komponente A), B) und/oder gegebenenfalls C) zugegeben werden. Insbesondere ist eine Ausführungsform denkbar, derzufolge die Lösungs- bzw. Verdünnnungsmittel auch schon während der Herstellung der Komponenten A) und B) zugegeben sind, wie dies z.B. bei der Herstellung der Copolymerisate beschrieben worden ist.

Lösungs- bzw. Verdünnungsmittel werden im allgemeinen in solchen Mengen mitverwendet, die zur Einstellung von geeigneten Verarbeitungsviskositäten erforderlich sind.

Der Festgehalt, der der erfindungsgemäßen Verwendung zuzuführenden erfindungsgemäßen Kompositionen liegt im allgemeinen zwischen 20 und 80 Gew.-%. Durch Verwendung geeigneter niedermolekularer Copolymerisate ist es jedoch prinzipiell auch möglich, den Lösungs- bzw. Verdünnungsmittelgehalt noch weiter zu reduzieren, insbesondere im Falle der Herstellung von Dichtmassen unter Verwendung der erfindungsgemäßen Bindemittelkombinationen.

Die erfindungsgemäßen Bindemittelkombinationen können direkt, ohne weitere Zusätze, zur Herstellung von klaren Überzügen verwendet werden. Die bei der Herstellung von Beschichtungsmitteln unter Verwendung der erfindungsgemäßen Bindemittelkombinationen im allgemeinen zum Einsatz gelangenden Lösungsmittel können im Prinzip die gleichen sein, die bereits bei der Herstellung der Copolymerisate A) und gegebenenfalls B) verwendet worden sind, so daß bei der Herstellung der Beschichtungsmitteln keine weiteren Lösungsmittel zugesetzt werden müssen. Falls die genannten Copolymerisate lösungsmittelfrei hergestellt worden sind oder lösungsmittelfrei vorliegen, werden bei der Herstellung von Beschichtungsmitteln im allgemeinen die üblichen Lacklösungsmittel der bereits beispielhaft genannten Art zugesetzt.

Außerdem können bei der Herstellung der Beschichtungsmittel die anderen, bereits oben genannten, in der Lackindustrie üblichen Hilfs- und Zusatzstoffe mitverwendet werden. Im Falle der Herstellung von Dichtmassen, die oftmals lösungsmittelfrei zum Einsatz gelangen, kann selbstverständlich auf die Mitverwendung von Lösungsmitteln verzichtet werden. Die auf diese Weise erhaltenen, gebrauchsfertigen Systeme können als Beschichtungs- oder Dichtmassen nach bekannten Methoden wie Spritzen, Streichen, Tauchen, Fluten, Gießen, Walzen auf beliebige, gegebenenfalls bereits vorbehandelte Untergründe wie z.B. Metall, Holz, Glas, Keramik, Stein, Beton, Kunststoffe, Textilien, Leder, Pappe und Papier aufgetragen werden.

In den nachfolgenden Beispielen beziehen sich alle Angaben in Prozenten und Teilen, falls nicht anders vermerkt, auf das Gewicht.

### Beispiele

### I. Allgemeine Herstellungsvorschrift für die Hydroxylund Epoxidgruppen enthaltenden Copolymerisate A₁ bis A₇ und die Anhydridgruppen enthaltenden Copolymerisate B₁ bis B₅

In einem 3-1-Reaktionsgefäß mit Rühr-, Kühl- und Heizvorrichtung wird Teil I vorgelegt und auf Reaktionstemperatur aufgeheizt. Dann werden parallel Teil II (Zugabe über einen Zeitraum von insgesamt 2 Stunden) und Teil III (Zugabe über einen Zeitraum von insgesamt 2,5 Stunden) zudosiert. Anschließend wird 2 Stunden bei der Reaktionstemperatur nachgerührt.

Die Reaktionstemperaturen und Zusammensetzungen der Teile I bis III der Hydroxyl- und Epoxidgruppen enthaltenden Copolymerisate A₁ bis A₇ sind in Tabelle I, zusammen mit den Kenndaten der erhaltenen Produkte, aufgeführt; die entsprechenden Daten für die Anhydridgruppen enthaltenden Copolymerisate B₁ bis B₅ sind in Tabelle II zu finden.

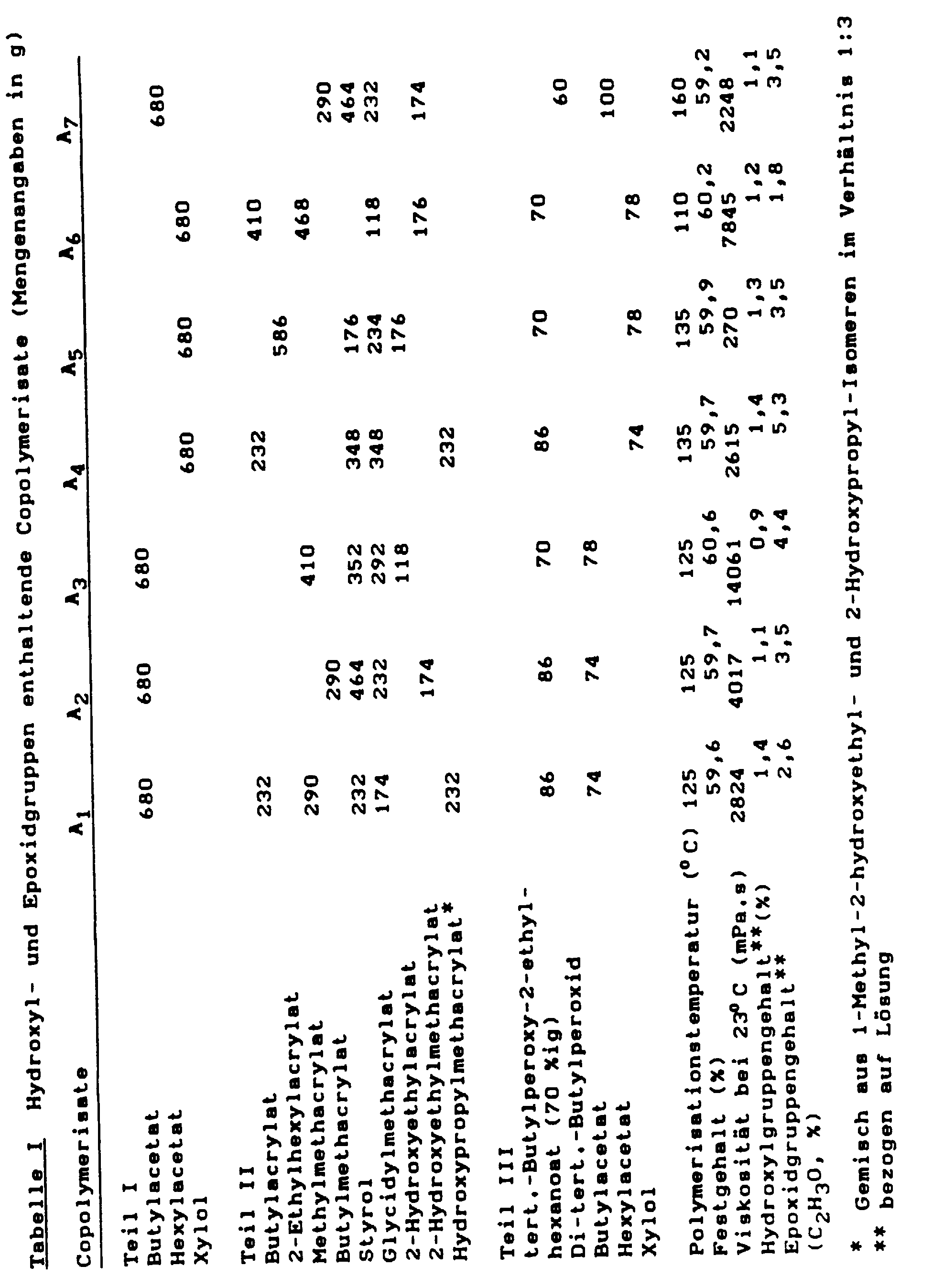

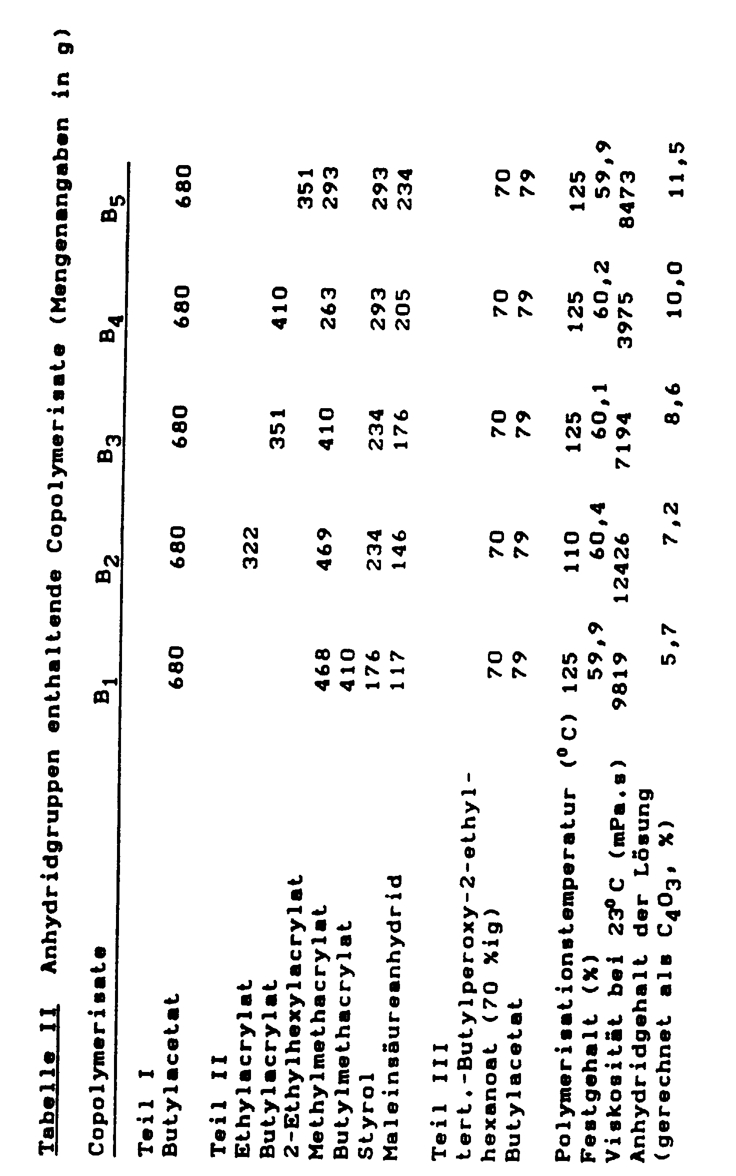

### II. Herstellung der erfindungsgemäßen Beschichtungsmittel

### a) Filmhärtung unter Einbrennbindungen

Die Copolymerisate A₁ bis A₇ werden mit einem der Copolymerisate B₁ bis B₅ gemischt und gegebenenfalls durch Zugabe eines organischen Lösungs- bzw. Verdünnungsmittels auf eine verarbeitungsfähige Viskosität eingestellt. Die Filme werden mit einem Filmzieher auf Prüfbleche aufgezogen, wobei die Naßfilmstärke 150 µm beträgt. Nach 5 Minuten Ablüften bei Raumtemperatur werden die beschichteten Prüfbleche 30 Minuten bei 150°C gelagert. Danach werden sie auf Raumtemperatur abgekühlt. Man erhält auf diese Weise klare, farblose, vernetzte Lackfilme mit guten optischen und mechanischen Werten.

Die Lösungsmittelfestigkeit wird durch einen Wischtest mit einem Methylisobutylketon (MIBK)-getränkten Wattebausch geprüft. Angegeben wird die Anzahl der Doppelhübe, nach denen der Lackfilm ohne sichtbare Veränderung bleibt. Mehr als 200 Doppelhübe pro Film wurden nicht durchgeführt.

In der folgenden Tabelle III werden die Zusammensetzungen der Bindemittelkombinationen und die Lösungsmittelfestigkeit als Grad der Vernetzung aufgeführt.

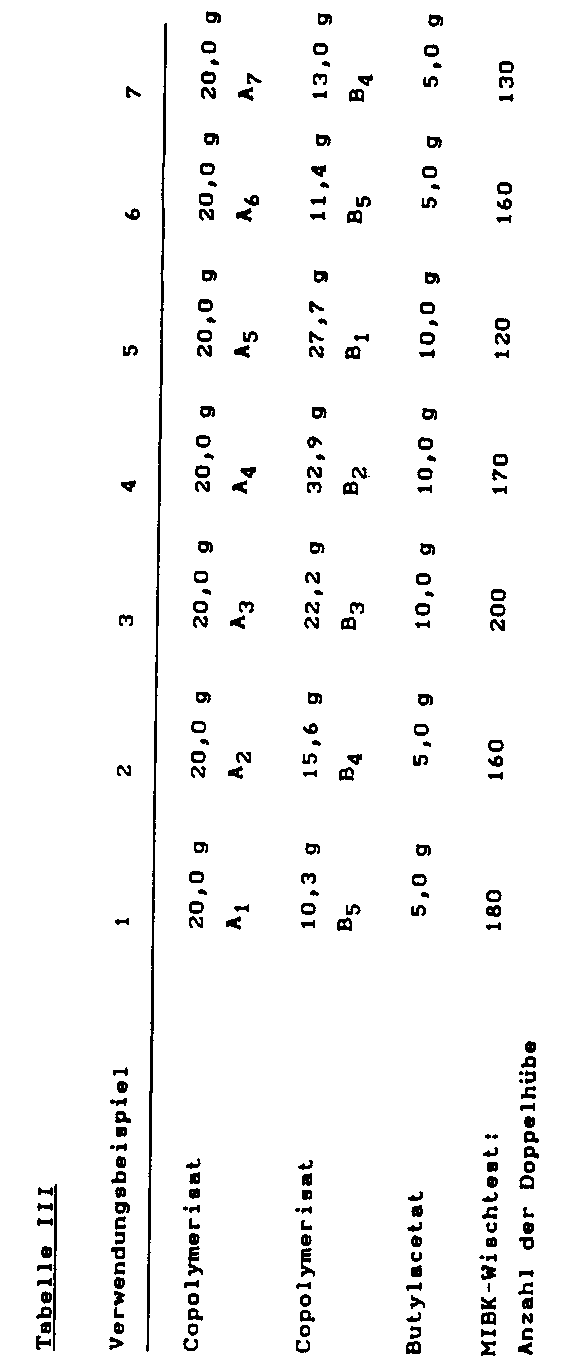

### b) Filmhärtung bei Raumtemperatur

Die Copolymerisate A₁ bis A₇ werden mit einem der Copolymerisate B₁ bis B₅ und einem tertiären Amin bei Raumtemperatur vermischt und gegebenenfalls durch Zugabe eines organischen Lösungs- bzw. Verdünnungsmittels auf eine verarbeitungsfähige Viskosität eingestellt. Die Filme werden mit einem Filmzieher auf Prüfbleche aufgezogen, wobei die Naßfilmstärke 150 µm beträgt. Die so bei Raumtemperatur aufgezogenen Filme waren alle spätestens nach 60 Minuten klebfrei durchgetrocknet. Nach Alterung, d.h. 24 Stunden Trocknung bei Raumtemperatur, erhält man klare, farblose, vernetzte Filme mit guten optischen und mechanischen Werten.

Die angesetzten Lackmischungen weisen durchweg eine Standzeit von mehreren (>3) Stunden auf. Die Lösungsmittelfestigkeit wird wie zuvor beschrieben ermittelt.

In der folgenden Tabelle IV werden die Zusammensetzungen der Bindemittelkombinationen und die Lösungsmittelfestigkeit als Grad der Vernetzung aufgeführt.

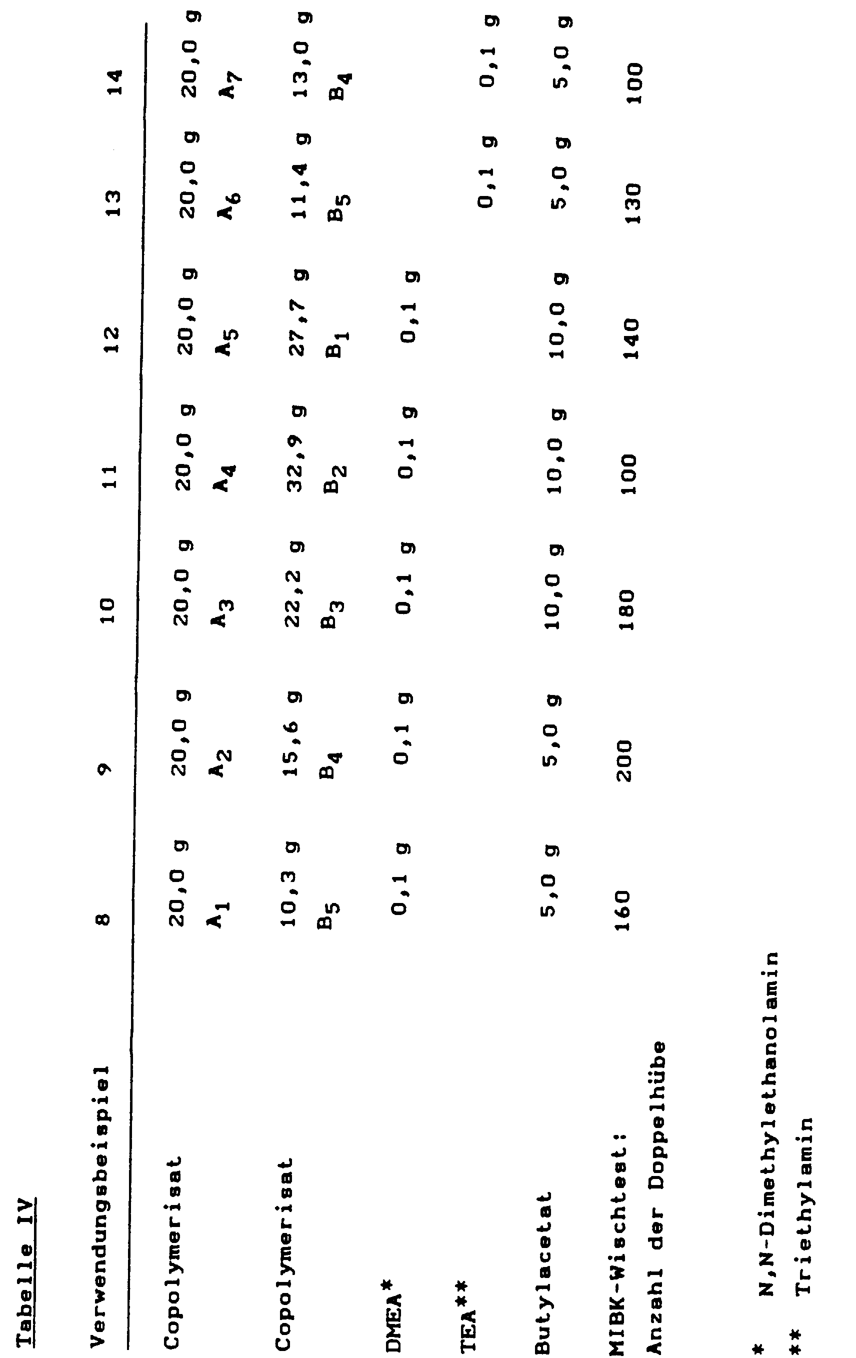

## Patentansprüche

1. Bindemittelkombinationen enthaltend
A) 10 bis 99 Gew.-Teile einer Copolymerisat-Komponente, bestehend aus mindestens einem Copolymerisat von olefinisch ungesättigten Verbindungen mit einem als Gewichtsmittel bestimmten Molekulargewicht von 1500 bis 75 000, welches sowohl
(i) 0,1 bis 8,0 Gew.-% an freien Hydroxylgruppen als auch
(ii) 1 bis 29 Gew.-% an Epoxidgruppen (berechnet als C₂H₃O)
chemisch gebunden enthält, und
B) 1 bis 90 Gew.-Teile einer Anhydrid-Komponente, bestehend aus mindestens einem organischen Polyanhydrid mit mindestens zwei cyclischen Carbonsäureanhydridgruppen pro Molekül,
mit der Maßgabe, daß auf jede Epoxidgruppe der Komponente A) 0,1 bis 10 Anhydridgruppen der Komponente B) entfallen.

2. Bindemittelkombinationen gemäß Anspruch 1, dadurch gekennzeichnet, daß die Copolymerisate der Komponente A) durch radikalisch initiierte Copolymerisation erhaltene Copolymerisate aus
a) 0,5 bis 70 Gew.-Teilen copolymerisierbaren, Hydroxylgruppen enthaltenden Monomeren,
b) 3 bis 97 Gew.-Teilen copolymerisierbaren, Epoxidgruppen enthaltenden Monomeren, sowie
c) 0 bis 96,5 Gew.-Teilen Hydroxylgruppen- und Epoxidgruppen-freien, nichtfunktionellen Monomeren, mit der Maßgabe, daß die Summe der Anteile a bis c) 100 Gew.-Teile ergibt,
darstellen.

3. Bindemittelkombinationen gemäß Anspruch 1 oder 2, dadurch gekennzeichnet, daß in den Coplymerisaten der Komponente A) als einpolymerisierte, hydroxyfunktionelle Monomere Hydroxyalkylester der Acryl- und/oder Methacrylsäure vorliegen.

4. Bindemittelkombinationen gemäß Anspruch 1 bis 3, dadurch gekennzeichnet, daß in den Copolymerisaten der Komponente A) als einpolymerisierte, epoxidfunktionelle Monomere Glycidylacrylat und/oder Glycidylmethacrylat vorliegen.

5. Bindemittelkombinationen gemäß Anspruch 1 bis 3, dadurch gekennzeichnet, daß es sich bei der Komponente B) um mindestens ein Tetracarbonsäuredianhydrid, ausgewählt aus der Gruppe bestehend aus Verbindungen der Formel (I) 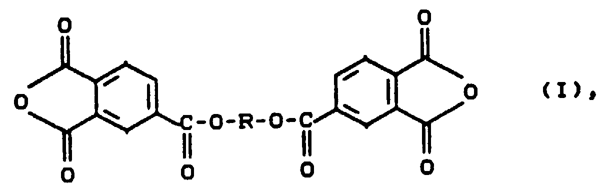 Verbindungen der Formel (II) 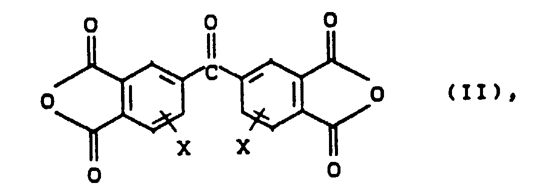 und der Verbindung der Formel (III) 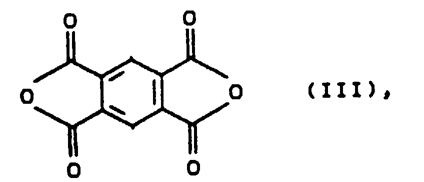 handelt, wobei
R für einen zweiwertigen, gegebenenfalls Ethersauerstoffatome aufweisenden Kohlenwasserstoffrest mit 2 bis 12 Kohlenstoffatomen steht, und
X für Wasserstoff oder Halogen-, -NO₂-, -COOH-oder -SO₃H-Substituenten steht und bei beiden aromatischen Kernen der Formel (II) gleich oder verschieden sein kann.

6. Bindemittelkombinationen gemäß Anspruch 1 bis 4, dadurch gekennzeichnet, daß es sich bei der Komponente B) um durch radikalisch initiierte Copolymerisation erhältliche, Anhydridgruppen aufweisende, Copolymerisate handelt.

7. Bindemittelkombinationen gemäß Anspruch 6, dadurch gekennzeichnet, daß in den Copolymerisaten der Komponente B) als einpolymerisierte, anhydridfunktionelle Monomere Maleinsäureanhydrid und/oder Itaconsäureanhydrid vorliegen.

8. Verwendung der Bindemittelkombinationen gemäß Anspruch 1 bis 7 als Bindemittel für hitzehärtbare Beschichtungsmittel oder Dichtmassen.

9. Verwendung der Bindemittelkombinationen gemäß Anspruch 1 bis 7, in Kombination mit, die Reaktion zwischen Säureanhydridgruppen und Hydroxylgruppen beschleunigenden Katalysatoren als Bindemittel für bei Raumtemperatur härtbare Beschichtungsmittel oder Dichtmassen.

## Claims

1. Binder combinations containing
A) from 10 to 99 parts by weight of a copolymer component, consisting of at least one copolymer of olefinically unsaturated compounds and having a molecular weight, determined as a weight average, of from 1500 to 75,000,
which contains chemically bound
(i) from 0.1 to 8.0 wt.% of free hydroxyl groups as well as
(ii) from 1 to 29 wt.% of epoxide groups (calculated as C₂H₃O) and
B) from 1 to 90 parts by weight of an anhydride component, consisting of at least one organic polyanhydride having at least two cyclic carboxylic anhydride groups per molecule,
with the proviso that 0.1 to 10 anhydride groups of component B are available for each epoxide group of component A).

2. The binder combinations according to claim 1, characterised in that the copolymers contained in component A) are copolymers obtained by radically initiated copolymerisation and consisting of
a) from 0.5 to 70 parts by weight of copolymerisable monomers containing hydroxyl groups,
b) from 3 to 97 parts by weight of copolymerisable monomers containing epoxide groups and
c) from 0 to 96.5 parts by weight of nonfunctional monomers free from hydroxyl groups and free from epoxide groups, with the proviso that the sum of the constituent parts a) to c) totals 100 parts by weight.

3. The binder combinations according to claim 1 or 2, characterised in that hydroxyalkyl esters of acrylic and/or methacrylic acid are present as polymerisable hydroxyfunctional monomers in the copolymers contained in component A).

4. The binder combinations according to claims 1 to 3, characterised in that glycidyl acrylate and/or glycidyl methacrylate are present as polymerisable epoxyfunctional monomers in the copolymers contained in component A).

5. The binder combinations according to claims 1 to 3, characterised in that component B) consists of at least one tetracarboxylic dianhydride, selected from the group comprising compounds corresponding to formula (I) 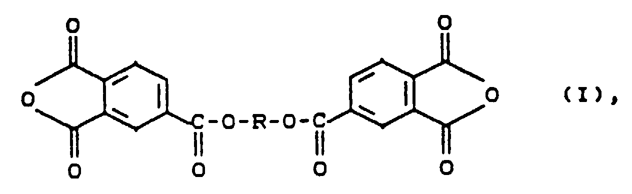 compounds corresponding to formula (II) 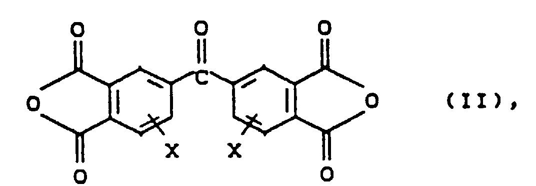 and the compound corresponding to formula (III) 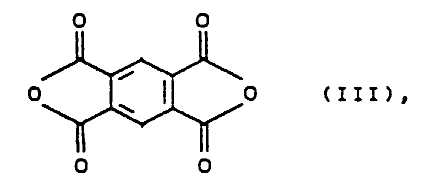 wherein
R represents a divalent hydrocarbon group optionally containing ether-bonded oxygen atoms and having 2 to 12 carbon atoms, and
X represents hydrogen or halogen, -NO₂-, -COOH-, or -SO₃H- substituents and can be identical or different in the two aromatic nuclei of formula (II).

6. The binder combinations according to claims 1 to 4, characterised in that component B) consists of copolymers which contain anhydride groups and are obtainable by radically initiated copolymerisation.

7. The binder combinations according to claim 6, characterised in that maleic anhydride and/or itaconic anhydride are present as polymerisable anhydride-functional monomers in the copolymers contained in component B).

8. The use of the binder combinations according to claims 1 to 7 as binders for coatings or sealants curable by heat.

9. The use of the binder combinations according to claims 1 to 7, in combination with catalysts which accelerate the reaction between acid anhydride groups and hydroxyl groups, as binders for coatings or sealants curable at room temperature.

## Revendications

1. Liants combinés contenant
A) 10 à 99 parties en poids d'un composant copolymère consistant en au moins un copolymère de composés à insaturation oléfinique, à un poids moléculaire moyen, moyenne en poids, de 1 500 à 75 000, et qui contient à la fois,
(i) 0,1 à 8,0 % en poids de groupes hydroxy libres et
(ii) 1 à 29 % en poids de groupes époxyde (exprimé en C₂H₃O),
à l'état chimiquement combiné, et
B) 1 à 90 parties en poids d'un composant anhydride consistant en au moins un polyanhydride organique à au moins deux groupes anhydrides d'acides carboxyliques cycliques par molécule,
avec la condition supplémentaire que, pour chaque groupe époxyde du composant A), il y ait 0,1 à 10 groupes anhydrides du composant B.

2. Liants combinés selon la revendication 1, caractérisés en ce que les copolymères du composant A) sont des copolymères obtenus par copolymérisation radicalaire à partir de
a) 0,5 à 70 parties en poids de monomères copolymérisables à groupes hydroxy,
b) 3 à 97 % en poids de monomères copolymérisables à groupes époxy, et
c) 0 à 96,5 parties en poids de monomères non fonctionnels, exempts de groupes hydroxy et de groupes époxyde,
la somme des proportions a) à c) représentant 100 parties en poids.

3. Liants combinés selon la revendication 1 ou 2, caractérisés en ce que les copolymères du composant A) contiennent en tant que monomères à fonction hydroxy et à l'état polymérisé, des esters hydroxyalkylique de l'acide acrylique et/ou méthacrylique.

4. Liants combinés selon les revendications 1 à 3, caractérisés en ce que les copolymères du composant A) contiennent en tant que monomères à ponction époxyde et à l'état polymérisé, l'acrylate de glycidyle et/ou le méthacrylate de glycidyle.

5. Liants combinés selon les revendications 1 à 3, caractérisés en ce que le composant B) consiste en au moins un dianhydride d'acide tétracarboxylique choisi dans le groupe consistant en les composés de formule (I) 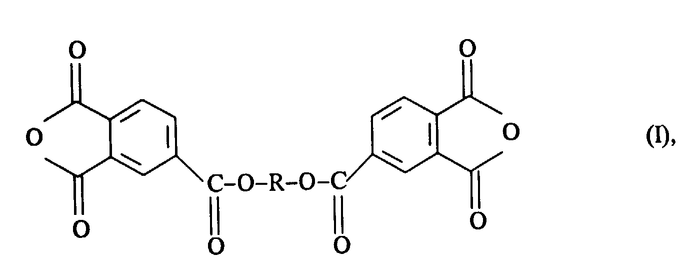 les composés de formule (II) 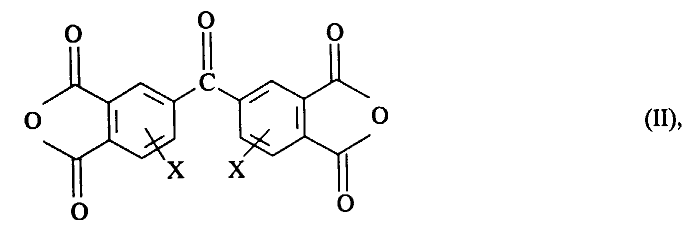 et les composés de formule (III) 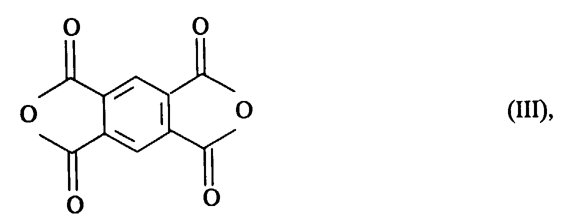
R représentant un radical hydrocarboné divalent contenant le cas échéant des atomes d'oxygène d'éther, à une longueur de 2 à 12 atomes de carbone, et
X représente l'hydrogène ou un substituant halogéno, -NO₂, -COOH ou -SO₃H, les substituants des deux noyaux aromatiques des composés de formule (II) pouvant être identiques ou différents.

6. Liants combinés selon les revendications 1 à 4, caractérisés en ce que le composant B) consiste en copolymères à groupes anhydrides obtenus par copolymérisation radicalaire.

7. Liants combinés selon la revendication 6, caractérisés en ce que les copolymères du composant B) contiennent en tant que monomères à fonction anhydride et à l'état polymérisé, l'anhydride maléique et/ou l'anhydride itaconique.

8. Utilisation des liants combinés selon les revendications 1 à 7, en tant que liants pour des produits de revêtement ou masses d'étanchéité thermodurcissables.

9. Utilisation des liants combinés selon les revendications 1 à 7, en combinaison avec des catalyseurs accélérant la réaction entre les groupes anhydrides d'acide et les groupes hydroxy, en tant que liants pour des produits de revêtement ou masses d'étanchéité durcissables à température ambiante.
